(19) Europäisches Patentamt
European Patent Office
Office européen des brevets

(11) Veröffentlichungsnummer: 0 358 958 A2

(12) # EUROPÄISCHE PATENTANMELDUNG

(21) Anmeldenummer: 89114950.2

(22) Anmeldetag: 12.08.89

(51) Int. Cl.5: C09B 29/085 , C09B 67/22 , D06P 1/18

(30) Priorität: 15.09.88 DE 3831356

(43) Veröffentlichungstag der Anmeldung: 21.03.90 Patentblatt 90/12

(84) Benannte Vertragsstaaten: CH DE FR GB IT LI

(71) Anmelder: CASSELLA Aktiengesellschaft
Hanauer Landstrasse 526
D-6000 Frankfurt am Main 61(DE)

(72) Erfinder: Bühler, Ulrich, Dr. Dipl.-Chem.
Kastanienweg 8
D-8755 Alzenau(DE)
Erfinder: Boos, Margareta
Am See 6
D-6234 Hattersheim 3(DE)
Erfinder: Kühn, Reinhard, Dipl.-Ing.
Heinrich-Bleicher-Strasse 39
D-6000 Frankfurt/Main 50(DE)

(74) Vertreter: Urbach, Hans-Georg, Dr. et al
Hanauer Landstrasse 526
D-6000 Frankfurt am Main 61(DE)

(54) **Wasserunlösliche Monoazofarbstoffe, ihre Herstellung und Verwendung sowie Mischungen aus diesen Monoazofarbstoffen.**

(57) Monoazofarbstoffe der allgemeinen Formel I

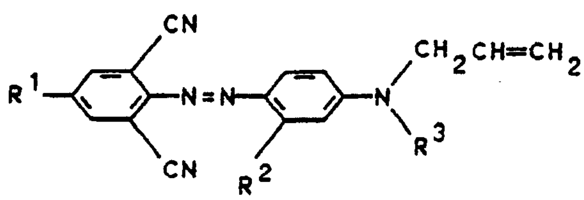

(I)

in der
$R^1$ Fluor, Chlor oder Brom,
$R^2$ Wasserstoff oder Chlor,
$R^3$ Alkyl mit 1 bis 4 C-Atomen, Allyl, Alkoxyalkyl mit 1 bis 4 C-Atomen in der Alkyl- und mit 1 bis 4 C-Atomen in der Alkoxygruppe und Cyanalkyl mit 2 bis 4 C-Atomen bedeuten, und Mischungen aus diesen Farbstoffen eignen sich hervorragend zum Färben und Bedrucken von hydrophoben Materialien.

EP 0 358 958 A2

## Wasserunlösliche Monoazofarbstoffe, ihre Herstellung und Verwendung sowie Mischungen aus diesen Monoazofarbstoffen

Die vorliegende Erfindung betrifft wertvolle neue Monoazofarbstoffe der allgemeinen Formel I

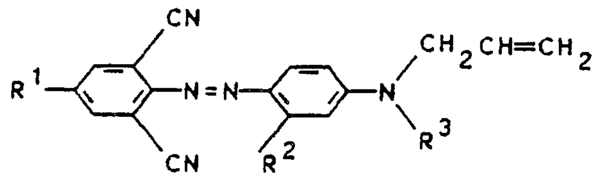

(I)

in der
$R^1$ Fluor, Chlor oder Brom,
$R^2$ Wasserstoff oder Chlor,
$R^3$ Alkyl mit 1 bis 4 C-Atomen, Allyl, Alkoxyalkyl mit 2 bis 4 C-Atomen in der Alkyl- und mit 1 bis 4 C-Atomen in der Alkoxygruppe oder Cyanalkyl mit 2 bis 4 C-Atomen
bedeuten.

Die Erfindung betrifft auch Mischungen von Farbstoffen der allgemeinen Formel I sowie die Herstellung dieser Farbstoffe und ihrer Mischungen und ihre Verwendung zum Färben und Bedrucken von hydrophoben Materialien.

Den erfindungsgemäßen Farbstoffen ähnliche Farbstoffe sind bereits bekannt und in der EP 25 903, der EP 155 470 und in JP 86/227,092 beschrieben. Es wurde nun überraschenderweise gefunden, daß die erfindungsgemäßen Farbstoffe der allgemeinen Formel I sowie die Mischungen aus diesen Farbstoffen im färberischen Verhalten auf verschiedenen Substraten, insbesondere bei Färbetemperaturen unter 130°C, in der pH- und Reduktionsempfindlichkeit sowie in einigen wichtigen Gebrauchsechtheiten, z.B. Lichtechtheit und Naßechtheit, den bekannten Farbstoffen überlegen sind.

Alkylreste, die für $R^3$ stehen, können verzweigt sein, sind jedoch vorzugsweise linear. Lineare Alkylreste, die für $R^3$ stehen können, sind Methyl, Ethyl, n-Propyl und n-Butyl.

Alkoxygruppen mit 1 bis 4 C-Atomen in den Alkoxyalkylresten, die für $R^3$ stehen können, sind z.B. Methoxy, Ethoxy, n-Propoxy, i-Propoxy, n-Butoxy, i-Butoxy oder tert.Butoxy.

Diese Alkoxyreste können mit Ausnahme der 1-Stellung in jeder Stellung des Alkylrestes der Alkoxyalkylgruppen stehen, so z.B. in einer Ethylgruppe in der 2-Stellung, in einer Propylgruppe in der 2- oder 3-Stellung und in einer Butylgruppe in der 2-, 3- oder 4-Stellung.

Beispiele für solche Alkoxyalkylgruppen sind 2-Methoxyethyl, 2-Butoxyethyl, 2-tert.Butoxyethyl, 2-Methoxypropyl, 3-Methoxypropyl, 2- oder 3-Propoxypropyl, 2-, 3-oder 4-Methoxybutyl. Bevorzugt sind solche Alkoxyalkylreste, in denen die Alkoxygruppe am äußersten C der Alkylkette gebunden ist. Bevorzugte Alkoxyalkylreste $R^3$ sind Alkoxyethylreste, insbesondere die Methoxy- und Ethoxyethylreste.

Cyanalkylreste, die für $R^3$ stehen können, sind 2-Cyanethyl, 3-Cyanpropyl-(1), 3-Cyanpropyl-(2) und 4-Cyanbutyl.

Ein bevorzugter Cyanalkylrest $R^3$ ist der 2-Cyanethylrest.

Bevorzugte Reste $R^3$ sind n-Propyl und insbesondere Ethyl und Allyl.

Bevorzugte Reste $R^1$ sind Chlor und Brom.

Ein bevorzugter Rest $R^2$ ist Wasserstoff.

Bevorzugte Farbstoffe der allgemeinen Formel I sind solche, bei denen $R^1$ Chlor oder Brom und $R^2$ Wasserstoff bedeuten.

Besonders bevorzugte Farbstoffe der allgemeinen Formel I sind solche mit bevorzugten Resten $R^1$, $R^2$ und $R^3$.

Die erfindungsgemäßen Farbstoffe der allgemeinen Formel I können dadurch hergestellt werden, daß man Azofarbstoffe der allgemeinen Formel II

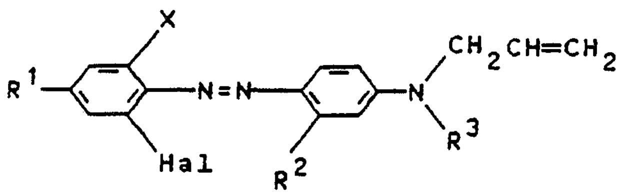

(II)

in welcher $R^1$, $R^2$ und $R^3$ die vorstehenden Bedeutungen haben, X Cyan oder Hal und Hal ein Halogenatom wie Chlor oder insbesondere Brom bedeuten, in an sich bekannter Weise, z.B. nach den Angaben der DE-OS 1809920, der DE-OS 1809921, der GB-PS 1184825, der DE-AS 1544563, der DE-OS 2310745, der DE-AS 2456495, der DE-AS 2610675, der DE-OS 2724116, der DE-OS 2724117, der DE-OS 2834137, der DE-OS 2341109, der US-PS 3821195, der DE-OS 2715034 oder der DE-OS 2134896 einer nukleophilen Austauschreaktion unterwirft, wobei als nucleophiles Agenz das Cyanidion $CN^{\ominus}$ eingesetzt wird.

Als Lösungsmittel für die Austauschreaktion werden inerte organische Lösungsmittel, wie z.B. Nitrobenzol oder Glycol- oder Diglycol-mono-methyl oder -mono-ethylether oder Mischungen solcher Lösungsmittel untereinander und mit tertiären organischen Stickstoffbasen, dipolare aprotische Lösungsmitel, wie z.B. N-Methylpyrrolidon, Pyridin, Dimethylformamid, Dimethylsulfoxyd oder Dicyan-dialkylthioether eingesetzt. Weiterhin sind als Medium für die Austauschreaktion Wasser oder wäßrige Systeme bestehend aus Wasser und einem mit Wasser nicht mischbaren organischen Lösungsmittel, wie z.B. Nitrobenzol, vorzugsweise in Gegenwart eines Netz- bzw. Dispergiermittels oder eines bekannten Phasentransferkatalysators oder aus Wasser und einem wasserlöslichen, inerten organischen Lösungsmittel, wie Ethylenglykol oder Dimethylformamid, geeignet.

Günstig wirkt sich auf die Austauschreaktion auch die Anwesenheit von organischen, basischen Stickstoffverbindungen, wie z.B. Pyridin und Pyridinbasen, aus.

Die Reaktionstemperaturen für die Austauschreaktion liegen normalerweise zwischen 20 und 150°C.

Das nucleophile Agenz $CN^{\ominus}$ wird der Reaktion in Form eines gegebenenfalls komplexen Metallcyanids, wie z.B. eines Alkali- oder Erdalkalicyanids, Zinkcyanids, Alkalicyano-zinkats oder -ferrats, vorzugsweise aber in Form von Kupfer-I-cyanid oder eines Kupfer-I-cyanid ausbildenden Systems, zugefügt. Besonders bewährt ist der Einsatz einer Kombination von Alkalicyanid mit Kupfers-I-cyanid, wobei das Gewichtsverhältnis von Alkali und Kupfersalz in weiten Grenzen variiert werden kann.

Der gängige Bereich des Alkalicyanid/Kupfer-I-cyanid-Verhältnisses liegt bei 5:95 bis 95:5. Auch außerhalb dieser Grenzen ist noch die positive gegenseitige Beeinflussung der Komponenten feststellbar. Selbstverständlich ist es auch möglich, das Kupfer-I-cyanid seinerseits durch ein Kupfer-I-cyanid ausbildendes System, wie z.B. einer Kombination von Alkalicyanid mit einem anderen Kupfersalz, vorzugsweise Kupfer-I-salz, wie z.B. einem Kupfer-I-halogenid, zu ersetzen.

Die zur Herstellung der erfindungsgemäßen Farbstoffe der allgemeinen Formel I erforderlichen Farbstoffe der allgemeinen Formel II können dadurch hergestellt werden, daß eine Diazoniumverbindung eines aromatischen Amins der allgemeinen Formel III

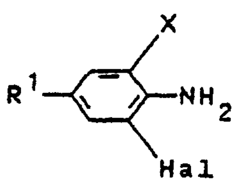

(III)

mit einer Kupplungskomponente der allgemeinen Formel IV

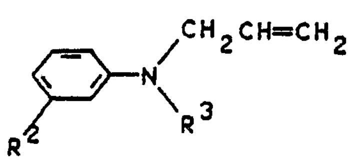

(IV)

wobei $R^1$, $R^2$ und $R^3$ die oben angegebenen Bedeutungen haben, gekuppelt wird.

Aus den Aminen der allgemeinen Formel III werden die Diazoniumverbindungen in an sich bekannter Weise durch Einwirkung von salpetriger Säure oder anderen Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, oder einem organischen Lösungsmittel bei Temperaturen von -15°C bis 40°C erhalten.

Die Kupplung erfolgt ebenfalls in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. einem Alkanol mit mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff der allgemeinen Formel II kann wie üblich isoliert und getrocknet werden.

Die benötigten Komponenten der allgemeinen Formeln III und IV lassen sich aus bekannten Handelsprodukten nach bekannten Verfahren herstellen.

Ein weiteres Verfahren zur Herstellung der erfindungsgemäßen Farbstoffe der allgemeinen Formel I besteht darin, daß man ein Amin der allgemeinen Formel V

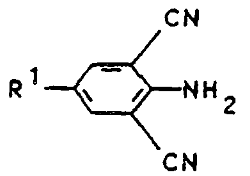

(V)

diazotiert und auf eine Kupplungskomponente der allgemeinen Formel IV

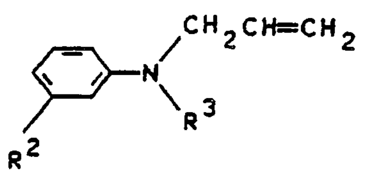

(IV)

wobei $R^1$, $R^2$ und $R^3$ die oben angegebenen Bedeutungen haben, kuppelt.

Aus den Aminen der allgemeinen Formel V werden die Diazoniumverbindungen in an sich bekannter Weise durch Einwirkung von salpetriger Säure oder anderen, Nitrosoniumionen bildenden Systemen in einer Mineralsäure oder einem mineralsauren wäßrigen Medium, einer Niederalkancarbonsäure, wie z.B. Ameisensäure, Essigsäure oder Propionsäure oder deren Mischungen, oder einem organischen Lösungsmittel bei Temperaturen von 0 bis 40°C erhalten.

Die Kupplung erfolgt auch hier in an sich bekannter Weise durch Vereinigung der erhaltenen Diazolösung mit einer Lösung der Kupplungskomponente bei Temperaturen von 0 bis 40°C, vorzugsweise 0 bis 25°C, in einem geeigneten Lösungsmittel, wie z.B. einem Alkanol mit 1 bis 4 C-Atomen, Dimethylformamid, vorzugsweise in mit Schwefelsäure, Salzsäure oder Phosphorsäure angesäuertem Wasser, oder einer gegebenenfalls wasserhaltigen Niederalkancarbonsäure oder einem Niederalkancarbonsäuregemisch, gegebenenfalls auch in Gegenwart eines mit Wasser begrenzt mischbaren Alkanols. In manchen Fällen kann es zweckmäßig sein, während der Kupplung den pH-Wert abzupuffern, z.B. durch Zugabe von Natriumacetat. Die Kupplung ist nach einigen Stunden beendet, und der Farbstoff kann wie üblich isoliert und getrocknet werden.

Die erfindungsgemäßen Farbstoffmischungen bestehen aus zwei oder mehreren Farbstoffen der allgemeinen Formel I, in der $R^1$, $R^2$ und $R^3$ die oben angegebenen Bedeutungen haben.

Die erfindungsgemäßen Mischungen können hergestellt werden durch Mischen der separat hergestellten und formierten Einzelfarbstoffkomponenten. Dieses Mischen kann in geeigneten Mischern oder Mühlen oder aber durch Einrühren in die Färbeflotte geschehen. Es ist aber bevorzugt, die separat hergestellten Einzelfarbstoffkomponenten gemeinsam zu formieren, wobei das Mischen bei der Herstellung von Farbstoffpulvern unmittelbar vor dem Sprühtrocknen, bei Farbstoffpulvern und flüssigen Farbstoffpräparationen

vorzugsweise vor dem Aufmahlen erfolgen kann. Besonders bevorzugt ist hierbei eine gemeinsame thermische Stabilisierung vor dem Aufmahlen.

Nach einem besonders bevorzugten Verfahren können die erfindungsgemäßen Farbstoffmischungen dadurch hergestellt werden, daß man in Farbstoffmischungen, die aus mindestens zwei Farbstoffen der allgemeinen Formel II bestehen, in an sich bekannter Weise Halogen gegen Cyan austauscht, wie es z.B. vorstehend bereits für die Einzelfarbstoffe beschrieben ist und die erhaltene Mischung formiert. Die Zusammensetzung der Mischung der Farbstoffe der allgemeinen Formel II wird dabei so gewählt, daß erfindungsgemäße Farbstoffmischungen entstehen.

In den erfindungsgemäßen Farbstoffmischungen kann das Verhältnis der verschiedenen Farbstoffe der allgemeinen Formel I in relativ weiten Grenzen variieren. Im allgemeinen beträgt der Mindestgewichtsanteil einer Komponente 10 % und ihr maximaler Gewichtsanteil 90 %. Bei Farbstoffmischungen, die nur aus zwei Farbstoffen der allgemeinen Formel I bestehen, ist ein Gewichtsverhältnis von 70:30 bis 30:70 bevorzugt, d.h. der Gewichtsanteil eines Farbstoffs beträgt 30 bis 70 %.

Die erfindungsgemäßen Farbstoffe der allgemeinen Formel I und Mischungen aus diesen Farbstoffen sind, auch im Gemisch mit anderen Dispersionsfarbstoffen, vorzüglich zum Färben und Bedrucken von hydrophoben Materialien geeignet.

Als hydrophobe Materialien kommen z.B. in Betracht: Cellulose-2$^1/_2$-acetat, Cellulosetriacetat, Polyamide und besonders hochmolekulare Polyester, wie z.B. Polyethylenglykolterephthalat.

Vorzugsweise werden die erfindungsgemäßen Farbstoffe der allgemeinen Formel I sowie die Mischungen aus diesen Farabstoffen zum Färben und Bedrucken von Materialien aus hochmolekularen Polyestern, insbesondere solchen auf Basis von Polyethylenglykolterephthalaten oder deren Mischungen mit natürlichen Faserstoffen, oder von Materialien aus Zellulosetriacetat eingesetzt.

Diese Materialien können in Form von flächen- oder fadenförmigen Gebilden vorliegen und z.B. zu Garnen oder gewebten oder gestrickten Textilstoffen verarbeitet sein. Das Färben des genannten Fasergutes mit den erfindungsgemäßen Farbstoffen erfolgt in an sich bekannter Weise, vorzugsweise aus wäßriger Suspension, gegebenenfalls in Gegenwart von Carriern, zwischen 80 bis ca. 110°C nach dem Ausziehverfahren oder nach dem HT-Verfahren im Färbeautoklav bei 110 bis 140°C, sowie nach dem sogenannten Thermofixierverfahren, wobei die Ware mit der Färbeflotte geklotzt und anschließend bei etwa 80 bis 230°C fixiert wird. Das Bedrucken der genannten Materialien kann so durchgeführt werden, daß die mit erfindungsgemäße Farbstoffe enthaltenden Druckpasten bedruckte Ware zur Fixierung des Farbstoffs, gegebenenfalls in Gegenwart eines Carriers, bei Temperaturen zwischen 80 bis 230°C mit HT-Dampf, Druckdampf oder Trockenhitze behandelt wird. Man erhält auf diese Weise sehr farbstarke rote Färbungen und Drucke mit sehr guten Echtheitseigenschaften, insbesondere einer sehr guten Lichtechtheit und einer geringen pH-und Reduktionsempfindlichkeit.

Die erfindungsgemäßen Farbstoffe und Mischungen eignen sich auch zum Färben der vorstehend aufgeführten hydrophoben Materialien aus organischen Lösungsmitteln nach den hierbei bekannten Methoden und zum Färben in der Masse.

In den bei obigen Applikationen eingesetzten Färbeflotten und Druckpasten sollen die erfindungsgemäßen Farbstoffe in möglichst feiner Verteilung vorliegen.

Die Feinverteilung der Farbstoffe erfolgt in an sich bekannter Weise dadurch, daß man den in der Fabrikation anfallenden Farbstoff zusammen mit Dispergiermiteln in einem flüssigen Medium, vorzugsweise in Wasser, aufschlämmt und die Mischung der Einwirkung von Scherkräften aussetzt, wobei die ursprünglich vorhandenen Farbstoff-Teilchen mechanisch so weit zerkleinert werden, daß eine optimale spezifische Oberfläche erreicht wird und die Sedimentation des Farbstoffs möglichst gering ist. Die Teilchengrößen der Farbstoffe liegt im allgemeinen zwischen 0,5 und 5 µm, vorzugsweise bei etwa 1 µm.

Die bei dem Mahlvorgang mitverwendeten Dispergiermittel können nichtionogen oder anionaktiv sein. Nichtionogene Dispergiermittel sind z.B. Umsetzungsprodukte von Alkylenoxiden, wie z.B. Ethylen- oder Propylenoxid mit alkylierbaren Verbindungen, wie z.B. Fettalkoholen, Fettaminen, Fettsäuren, Phenolen, Alkylphenolen und Carbonsäure amiden. Anionaktive Dispergiermittel sind beispielsweise Ligninsulfonate, Alkyl- oder Alkylarylsulfonate oder Alkyl-aryl-polyglykolethersulfate.

Die so erhaltenen Farbstoffzubereitungen sollen für die meisten Anwendungsweisen gießbar sein. Der Farbstoff- und Dispergiermittelgehalt ist daher in diesen Fällen limitiert. Im allgemeinen werden die Dispersionen auf einen Farbstoffgehalt bis zu 50 Gewichtsprozent und einen Dispergiermittelgehalt bis zu etwa 25 Gewichtsprozent eingestellt. Aus ökonomischen Gründen werden Farbstoffgehalte von 15 Gewichtsprozent meist nicht unterschritten.

Die Dispersionen können auch noch weitere Hilfsmittel enthalten, z.B. solche, die als Oxidationsmittel wirken, wie z.B. Natrium-m-nitrobenzolsulfonat oder fungicide Mittel, wie z.B. Natrium-o-phenyl-phenolat und Natriumpentachlorphenolat.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff oder das Farbstoffgemisch, Dispergiermittel und andere Hilfsmittel, wie z.B. Netz-, Oxydations-, Konservierungs-und Entstaubungsmittel.

Ein bevorzugtes Herstellungsverfahren für pulverförmige Farbstoffzubereitungen besteht darin, daß den oben beschriebenen flüssigen Farbstoffdispersionen die Flüs sigkeit entzogen wird, z.B. durch Vakuumtrocknung, Gefriertrocknung, durch Trocknung auf Walzentrocknern, vorzugsweise aber durch Sprühtrocknung.

Zur Herstellung der Färbeflotten werden die erforderlichen Mengen der Farbstoffeinstellungen, die gemäß den obigen Angaben hergestellt wurden, mit dem Färbemedium, vorzugsweise mit Wasser, so weit verdünnt, daß sich für die Färbung ein Flottenverhältnis von 1:5 bis 1:50 ergibt. Zusätzlich werden den Flotten im allgemeinen weitere Färbereihilfsmittel, wie Dispergier-, Netz- und Fixierhilfsmittel zugesetzt.

Soll der Farbstoff oder die Farbstoffmischung für den Textildruck herangezogen werden, so werden die erforderlichen Mengen der Farbstoffeinstellungen zusammen mit Verdickungsmitteln, wie z.B. Alkali-Alginaten oder dergleichen, und gegebenenfalls weiteren Zusätzen, wie z.B. Fixierbeschleunigern, Netzmitteln und Oxydationsmitteln, zu Druckpasten verknetet.

Die Erfindung wird durch die folgenden Beispiele näher erläutert. Prozentangaben sind Gewichtsprozente.

Beispiel 1

a) In eine Suspension aus 100 ml Dimethylsulfoxid, 14 g Kupfer-I-cyanid und 4 g Natriumcyanid werden bei 75 bis 80°C 45,7 g des Farbstoffs der Formel

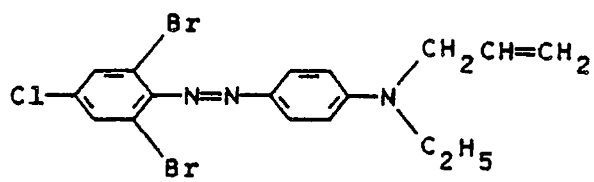

eingetragen und 30 min bei dieser Temperatur gerührt. Dann wird die Temperatur 30 min auf 110°C angehoben und der Ansatz anschließend langsam kaltgerührt, abgesaugt, mit 45 ml Dimethylsulfoxid, 7,5%iger wäßriger Ammoniaklösung und Wasser gewaschen und unter vermindertem Druck getrocknet. Man erhält so einen blaustichig roten Farbstoff der Formel

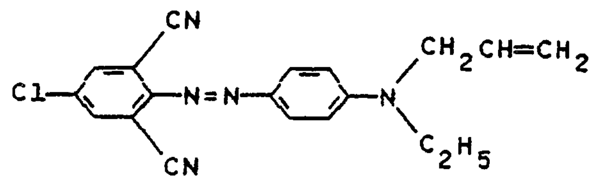

der bei 513 nm sein Absorptionsmaximum besitzt.
Durch einen praxisüblichen Finish-Prozeß durch wäßrige Perlmahlung mit einem praxisüblichen Dispergiermittel auf Basis Ligninsulfonat und anschließende Sprühtrocknung erhält man eine färbefertige Farbstoffpräparation.

b) 1,2 g der so erhaltenen Farbstoffpräparation werden in 2000 g Wasser dispergiert. Die Dispersion wird mit Essigsäure auf einen pH-Wert von 4 - 5 eingestellt und mit 4 g wasserfreiem Natriumacetat und 2 g eines handelsüblichen Dispergiermittels auf Basis eines Naphthalinsulfonsäure-Formaldehyd-Kondensats versetzt. In die so erhaltene Färbeflotte bringt man 100 g eines Polyestergewebes auf Basis von Polyethylenglykolterephthalat ein und färbt 30 min bei 120°C. Nach anschließendem Spülen, reduktivem Nachbehandeln mit einer 0,2%igen wäßrigen Natriumdithionit-Lösung während 15 min bei 70 bis 80°C,

Spülen und Trocknen erhält man eine farbstarke rote Färbung mit sehr guten coloristischen Eigenschaften. Es verbleibt keine merkliche Farbstoffmenge im Färbebad.

c) Wird eine Färbeflotte aus 0,6 g des nach Beispiel 1a hergestellten Farbstoffs so bereitet wie im Beispiel 1b beschrieben, und werden darin 100 g eines Triacetat-Gewebes 1 Stunde bei 120°C gefärbt und wie im Beispiel 1b beschrieben fertiggestellt, so erhält man eine farbstarke rote Färbung mit sehr guten coloristischen Eigenschaften.

d) Führt man die im Beispiel 1c beschriebene Färbung unter Zusatz eines handelsüblichen Färbebeschleunigers (Carriers) bei einer auf 98-100°C verringerten Färbetemperatur aus, erhält man eine gleichwertige Färbung bei gleichwertiger Färbebaderschöpfung.

Beispiel 2

Werden in Beispiel 1 die 45,7 g des dort mit der Strukturformel angeführten Dibromazofarbstoffes ersetzt durch 51,3 g des Dibromazofarbstoffes der Formel

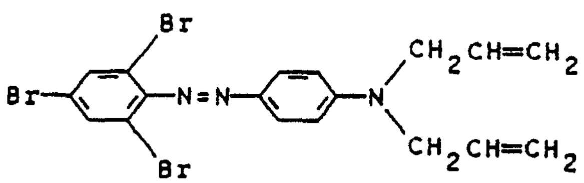

und so verfahren, wie im Beispiel 1 angegeben, so erhält man 34 g des Farbstoffs der Formel

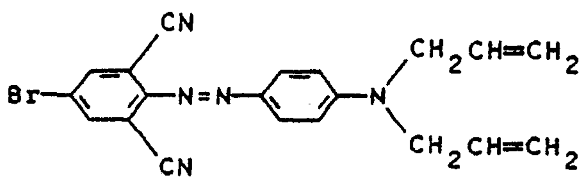

der bei 507 nm sein Absorptionsmaximum hat und Polyester ebenfalls in einem farbstarken klaren roten Farbton mit sehr guten coloristischen Echtheiten färbt.

In der nachfolgenden Tabelle sind weitere erfindungsgemäße Farbstoffe angegeben, die auf hydrophoben Fasermaterialien ebenfalls farbstarke rote Färbungen oder Drucke mit ebenfalls sehr guten coloristischen Eigenschaften liefern.

Tabelle

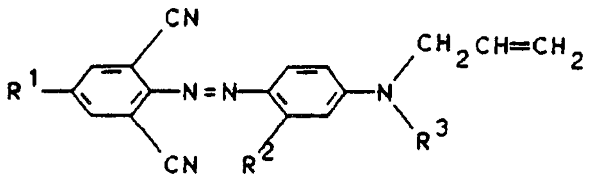

| Beispiel | $R^1$ | $R^2$ | $R^3$ |
|---|---|---|---|
| 3 | Br | H | $C_2H_5$ |
| 4 | Cl | H | $nC_3H_7$ |
| 5 | Br | H | $nC_3H_7$ |
| 6 | Cl | H | $nC_4H_9$ |
| 7 | Br | H | $nC_4H_9$ |
| 8 | F | H | $C_2H_5$ |
| 9 | F | H | $nC_3H_7$ |
| 10 | F | H | $nC_4H_9$ |
| 11 | F | H | $CH_2CH=CH_2$ |
| 12 | Cl | H | $CH_2CH=CH_2$ |
| 13 | Br | H | $CH_2CH=CH_2$ |
| 14 | F | H | $CH_3$ |
| 15 | Cl | H | $CH_3$ |
| 16 | Br | H | $CH_3$ |
| 17 | Br | H | $iC_3H_7$ |
| 18 | Br | H | $iC_4H_9$ |
| 19 | F | Cl | $C_2H_5$ |
| 20 | F | Cl | $nC_3H_7$ |
| 21 | F | Cl | $nC_4H_9$ |
| 22 | Cl | Cl | $CH_3$ |

| Beispiel | $R^1$ | $R^2$ | $R^3$ |
|---|---|---|---|
| 23 | Cl | Cl | $C_2H_5$ |
| 24 | Cl | Cl | $nC_3H_7$ |
| 25 | Br | Cl | $C_2H_5$ |
| 26 | Br | Cl | $nC_4H_9$ |
| 27 | Br | Cl | $CH_2CH=CH_2$ |
| 28 | Cl | Cl | $CH_2CH=CH_2$ |
| 29 | F | Cl | $CH_2CH=CH_2$ |
| 30 | Cl | H | $iC_3H_7$ |
| 31 | Cl | H | $iC_4H_9$ |
| 32 | Cl | $CH_3$ | $iC_4H_9$ |
| 33 | Cl | Cl | $iC_4H_9$ |
| 34 | Br | H | $(CH_2)_2OCH_3$ |
| 35 | Cl | H | $(CH_2)_2OCH_3$ |
| 36 | F | H | $(CH_2)_2OCH_3$ |
| 37 | Br | H | $(CH_2)_2OC_2H_5$ |
| 38 | Cl | H | $(CH_2)_2OC_2H_5$ |
| 39 | F | H | $(CH_2)_2OC_2H_5$ |
| 40 | Br | H | $(CH_2)_2OnC_3H_7$ |
| 41 | Cl | H | $(CH_2)_2OiC_3H_7$ |
| 42 | Br | H | $(CH_2)_2OnC_4H_9$ |
| 43 | Cl | H | $(CH_2)_2OiC_4H_9$ |
| 44 | Cl | H | $(CH_2)_4OCH_3$ |
| 45 | Br | H | $(CH_2)_4OC_2H_5$ |
| 46 | Cl | H | $(CH_2)_2CN$ |
| 47 | Cl | H | $(CH_2)_3CN$ |
| 48 | Br | H | $(CH_2)_2CN$ |
| 49 | Br | H | $(CH_2)_4CN$ |
| 50 | Cl | Cl | $(CH_2)_2CN$ |
| 51 | Br | Cl | $(CH_2)_2CN$ |
| 52 | F | Cl | $(CH_2)_2CN$ |
| 53 | F | H | $(CH_2)_2CN$ |
| 54 | Br | H | $CH_2CH(CH_3)CN$ |
| 55 | Cl | H | $CH_2CH(CH_3)CN$ |

Die nachfolgenden Beispiele betreffen erfindungsgemäße Mischungen von Farbstoffen:

| Beispiel | $R^1$ | $R^2$ | $R^3$ | Mischungsanteil |
|---|---|---|---|---|
| 56 | Cl | H | $C_2H_5$ | 50 |
| | Cl | H | $nC_3H_7$ | 50 |
| 57 | Cl | H | $C_2H_5$ | 60 |
| | Br | H | $C_2H_5$ | 40 |
| 58 | Cl | H | $C_2H_5$ | 35 |
| | Cl | H | $CH_2CH=CH_2$ | 65 |
| 59 | Cl | H | $CH_2CH=CH_2$ | 40 |
| | Br | H | $CH_2CH=CH_2$ | 60 |
| 60 | Cl | Cl | $C_2H_5$ | 50 |
| | Br | H | $C_2H_5$ | 50 |
| 61 | F | H | $C_2H_5$ | 70 |
| | F | H | $nC_3H_7$ | 30 |
| 62 | F | H | $C_2H_5$ | 45 |
| | F | H | $CH_2CH=CH_2$ | 55 |
| 63 | F | H | $C_2H_5$ | 50 |
| | F | Cl | $CH_2CH=CH_2$ | 50 |
| 64 | Cl | H | $(CH_2)_2CN$ | 65 |
| | Cl | H | $(CH_2)_4CN$ | 35 |
| 65 | Cl | H | $C_2H_5$ | 10 |
| | Br | H | $(CH_2)_2CN$ | 90 |
| 66 | Cl | H | $C_2H_5$ | 80 |
| | Br | Cl | $(CH_2)_2CN$ | 20 |

| Beispiel | $R^1$ | $R^2$ | $R^3$ | Mischungsanteil |
|---|---|---|---|---|
| 67 | Cl | H | $(CH_2)_2OCH_3$ | 50 |
| | Cl | H | $(CH_2)_2OnC_4H_9$ | 50 |
| 68 | Cl | H | $(CH_2)_2OCH_3$ | 60 |
| | Br | H | $(CH_2)_2OiC_3H_7$ | 40 |
| 69 | Cl | H | $(CH_2)_2OCH_3$ | 75 |
| | Br | H | $(CH_2)_2CN$ | 25 |
| 70 | Cl | H | $CH_2CH=CH_2$ | 50 |
| | Br | H | $C_2H_5$ | 50 |
| 71 | Br | H | $C_2H_5$ | 45 |
| | Br | H | $nC_4H_9$ | 55 |
| 72 | Cl | H | $C_2H_5$ | $33^1/3$ |
| | Cl | H | $nC_4H_9$ | $33^1/3$ |
| | Cl | H | $CH_2CH=CH_2$ | $33^1/3$ |
| 73 | Br | H | $C_2H_5$ | 40 |
| | Cl | H | $nC_4H_9$ | 30 |
| | Br | H | $CH_2CH=CH_2$ | 30 |
| 74 | Br | Cl | $CH_2CH=CH_2$ | 20 |
| | Br | H | $C_2H_5$ | 50 |
| | Cl | H | $nC_3H_7$ | 30 |

## Ansprüche

1. Monoazofarbstoffe der allgemeinen Formel I

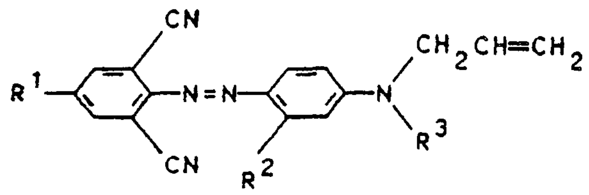

(I)

in der
$R^1$ Fluor, Chlor oder Brom,
$R^2$ Wasserstoff oder Chlor,
$R^3$ Alkyl mit 1 bis 4 C-Atomen, Allyl, Alkoxyalkyl mit 2 bis 4 C-Atomen in der Alkyl- und mit 1 bis 4 C-Atomen in der Alkoxygruppe und Cyanalkyl mit 2 bis 4 C-Atomen
bedeuten.

2. Monoazofarbstoffe gemäß Anspruch 1, dadurch gekennzeichnet, daß $R^1$ Chlor oder Brom bedeutet.

3. Monoazofarbstoffe gemäß Anspruch 1 und/oder 2, dadurch gekennzeichnet, daß $R^1$ Chlor oder Brom und $R^2$ Wasserstoff bedeuten.

4. Monoazofarbstoffe gemäß einem oder mehreren der Ansprüche 1 bis 3, dadurch gekennzeichnet, daß $R^3$ n-Propyl oder insbesondere Ethyl oder Allyl bedeutet.

5. Verfahren zur Herstellung der Monoazofarbstoffe der allgemeinen Formel I eines oder mehrerer der Ansprüche 1 bis 4, dadurch gekennzeichnet, daß man
a) einen Monoazofarbstoff der allgemeinen Formel II

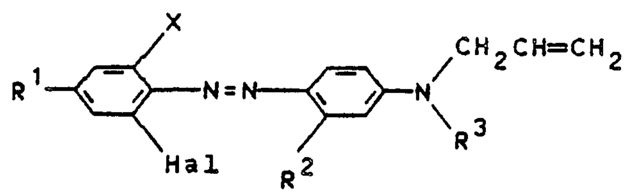

(II)

in welcher $R^1$, $R^2$ und $R^3$ die in Anspruch 1 genannten Bedeutungen haben, X Cyan oder Hal und Hal ein Halogenatom wie Chlor oder insbesondere Brom bedeuten, einer nukleophilen Austauschreaktion unterwirft, wobei als nucleophiles Agenz das Cyanidion $CN^{\ominus}$ eingesetzt wird,
oder daß man
b) ein Amin der allgemeinen Formel V

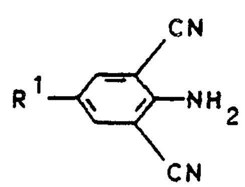

(V)

diazotiert und auf eine Kupplungskomponente der allgemeinen Formel IV

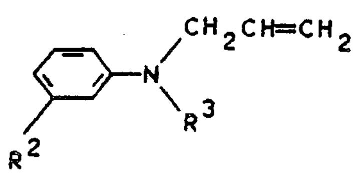

(IV)

wobei $R^1$, $R^2$ und $R^3$ die in Anspruch 1 angegebenen Bedeutungen haben, kuppelt.

6. Mischungen von zwei oder mehr verschiedenen Monoazofarbstoffen der allgemeinen Formel I eines oder mehrerer der Ansprüche 1 bis 4.

7. Verfahren zur Herstellung der Mischungen von Monoazofarbstoffen der allgemeinen Formel I gemäß

Anspruch 6, dadurch gekennzeichnet, daß man

a) zwei oder mehrere Einzelfarbstoffe der allgemeinen Formel I miteinander mischt oder daß man

b) ein Gemisch aus mindestens zwei Monoazofarbstoffen der allgemeinen Formel II

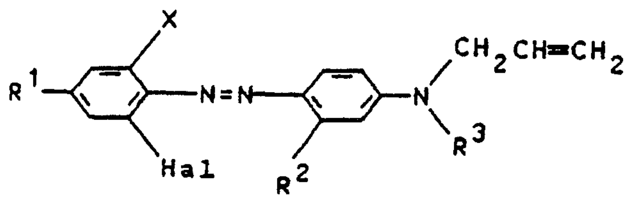

(II)

in welcher $R^1$, $R^2$ und $R^3$ die in Anspruch 1 genannten Bedeutungen haben, X Cyan oder Hal und Hal ein Halogenatom wie Chlor oder insbesondere Brom bedeuten, einer nukleophilen Austauschreaktion unterwirft, wobei als nucleophiles Agenz das Cyanidion $CN^{\ominus}$ eingesetzt wird, wobei man die Zusammensetzung dem Gemischs der Monoazofarbstoffe der allgemeinen Formel II so wählt, daß Mischungen von Monoazofarbstoffen der allgemeinen Formel I entstehen.

8. Verwendung der Monoazofarbstoffe der allgemeinen Formel I gemäß einem oder mehreren der Ansprüche 1 bis 4 oder der Mischungen der Monoazofarbstoffe der allgemeinen Formel I gemäß Anspruch 6 zum Färben und Bedrucken von hydrophoben Materialien.